# EUROPEAN PATENT SPECIFICATION

(11) **EP 1 520 885 B1**
(45) Date of publication and mention of the grant of the patent: **16.04.2008**
(21) Application number: 04255857.7
(22) Date of filing: 24.09.2004
(51) Int. Cl.: C09D 11/00

(54) **Process and compositions for printing**
Verfahren und Zusammensetzungen für das Drucken
Procédé et compositions pour l'impression

(30) Priority: 02.10.2003 US 508514 P; 01.04.2004 US 816990
(43) Date of publication of application: 06.04.2005
(73) Proprietor: ILLINOIS TOOL WORKS INC., Glenview, Illinois 60025 (US)
(72) Inventor: Sarma, Deverakonda S., Ridgefield, Connecticut 06877 (US)
(74) Representative: Jones, Helen M.M.

(56) References cited:
- EP-A- 0 514 159
- EP-A- 0 739 956
- EP-A- 0 879 858
- GB-A- 1 585 374
- US-A- 4 383 859
- US-A- 5 601 639
- US-A- 5 885 338

## Description

### Field of the Invention

The present invention relates to application of a printing medium to a substrate utilizing an ink-jet printing device and to adapting ink compositions to a form of improved suitability to utilization in an ink-jet printing device. The present invention relates also to such compositions.

### Background to the Invention

Printing, which generally involves applying a pattern of material to a substrate, whether for decorative, informative, or utilitarian purposes, is commonly accomplished in one of two ways. One common mechanism involves the use of an impact printing technique. As used herein, "impact printing" refers to a technique which uses an appliance to form and convey an ink pattern to a substrate by contacting the ink pattern formed on the appliance to the substrate. Another technique involves non-impact printing. As used herein, "non-impact printing" refers to any technique which forms an ink pattern directly on the substrate, for example, by projecting a stream of droplets of printing medium onto a substrate in a pattern. Examples of impact printing techniques are screen printing and offset printing. One example of non-impact printing is ink-jet printing.

In general, the term "printing medium" refers to a composition from which a decorative, informative, or utilitarian pattern of material is formed on a substrate (for example, ink). The terms "printing medium" and "printing composition" are used herein synonymously. Printing medium which is applied to a substrate in a printing operation, must have physical and chemical properties consistent with the requirements of the printing operation. Some of the properties required of a printing medium for use in impact printing techniques, for example, screen printing inks, are described by J. M. Adams, D.D. Faux, and L.J. Rieber in Printing Technology, 4th Edition, Delmar Publishers, (1996) Albany New York which is incorporated herein by reference. Examples of printing medium properties which are sometimes considered important with respect to impact printing include the viscosity and adhesive and cohesive properties of the printing medium, the particular type of printing equipment used, and the desired behavior of the medium on the substrate after application.

There are many variations of the basic screen printing technique which are adaptations of the technique to various types of substrates and substrate shapes, for example rotary, flat, roller, and pad screen printing. As is known, a printing screen is a mesh material which has had selected areas occluded with a printing medium-occlusive material. The printing screen is typically charged with printing medium by applying a printing medium to the front side of the screen and forcing it into the mesh of the screen in the non-occluded areas, forming an ink layer of even thickness which penetrates the screen to form a pattern according to the non-occluded areas in the screen. When the side of the screen bearing this patterned layer of printing medium is brought into contact with a substrate, the printing medium is transferred from the mesh of the screen to the contacted substrate.

Desirable printing medium properties for use in screen printing include sufficient viscosity and cohesion to form a film on the screen, sufficiently low adhesion to the screen to afford effective transfer of the film from the screen to the substrate, and sufficiently high adhesion to the substrate and/or penetration of the substrate to effectively provide a well-defined and rapidly cured pattern on the substrate after transfer. From the foregoing it will be appreciated that there is a wide range printing medium formulated for application to a broad variety of substrates using impact printing techniques.

Printing medium generally comprises a coloring agent (hereafter, a "colorant") which absorbs one or more wavelengths of light (rendering the printed image visible to the human eye), for example, a dye or a pigment, a dispersant (to maintain the colorant in a dispersed state), solvents (to permit the printing medium to flow), and a binder (to improve adhesion of the printing medium to the substrate to which it is applied). It will be appreciated that the screen printing technique can be utilized to apply materials which are not required to be visualized and accordingly do not require the incorporation of a colorant to carry out their primary function. An example of this is the application of a film which is impervious to a chemical etchant, for example, in the provision of a contact pattern onto a printed circuit board. Typically, even in such an application, a colorant is included in the composition permitting visual confirmation that the printed pattern has been applied with satisfactory coverage of the substrate.

Impact printing techniques generally require preparation of a separate appliance bearing a fixed design for each different type or color of printing medium to be applied. For example, in applying a three-color pattern to a textile substrate utilizing a screen printing technique a separate printing screen is required for each color of the design to be applied. The fixed nature of the design on the printing appliance and the number of appliances required to produce a multi-color design makes it difficult to rapidly change the pattern applied to a substrate when an impact printing technique is used. For the provision of a small number of printed items, printing utilizing an impact printing technique can be cumbersome, time consuming, and comparatively expensive. By comparison, ink-jet printing devices permit easy alteration of a pattern of markings applied to a substrate, permitting the coloration and the design pattern to be altered by manipulation of a computer program instead of preparing a physically different appliance.

Ink -jet printing devices apply printing media to a substrate by ejecting from the printing device a stream of regularly formed droplets of the printing medium. Unlike impact printing techniques, no appliance is needed to form the medium into a pattern when printing with an ink-jet device. In use, the ink-jet printing device is held a distance from the substrate to be printed and ejects this stream of droplets toward the substrate. When no ink is desired on an area of the substrate, the ink-jet device either extinguishes the stream of droplets (thermal and pulsed ink-jet printing devices) or diverts it from falling onto the substrate (continuous ink-jet devices). By controlling the stream of ink droplets in this manner as the device is passed across the substrate, the ink ejected onto the substrate is formed into a pattern. These operating principles distinguish ink-jet printing is a non-impact technique for printing on a substrate.

The physical and chemical properties of a printing composition which can be successfully applied utilizing ink-jet printing devices are well known. In general, suitable printing medium will have a Brookfield viscosity at 25°C of less than about 100 cps. Printing medium having this characteristic will flow from a reservoir into an ink-jet printing device at ambient temperature. This and other known physical properties required of ink-jettable printing medium are described by Pond in Ink-Jet Technology and Product Development Strategies, Terry Pines Research, 2000, Carlsbad, CA and are also described in Principles of Non-Impact Printing, 2nd Ed., 1992 Palatino Press, Irvine, CA, J. Johnston editor, both of which are incorporated herein by reference.

Accordingly, printing medium suitable for application utilizing an ink-jet printing device (also sometimes referred to herein for convenience as "ink-jettable" printing medium) must have a relatively low viscosity under the operating conditions of the ink-jet device in comparison with printing medium suitable for application utilizing impact ting techniques. In general, the viscosity of ink-jettable printing medium must be low enough to permit the ink to flow through the ink-jet device. In addition, ink-jettable printing medium must have at least some affinity for the materials from which the ink-jet printing device is constructed (that is, possess an ability to "wet" the portions of the ink-jet device contacted by the medium). This ensures consistency in the size and a number of droplets provided by the ink-jet device from which printing medium is jetted because droplet size is dependant upon the ability of the printing medium adequately, and consistently, fill the chamber(s) of some printing devices. The ability to fill the chambers is related to its ability to wet the internal portions of the ink-jet device. In addition, ink-jettable printing medium must have sufficient cohesiveness at the temperature at which it leaves the ink-jet printing device that it forms droplets of an appropriate size for application to the substrate being printed.

Ink jet printing devices and ink in a form suitable for printing utilizing an ink-jet printing device have been described, for example, in U.S. Patent Nos. 6,447,592 to Taniguchi, 6,302,536 to Sarma et al., 6,030,438 to Erdtmann et al., 5,154,761 to Cooke et al., and 5,085,698 to Ma et al. The Taniguchi, Sarma, Cooke, and Ma patents each describe a single-purpose ink composition adapted to exhibit a combination of physical and chemical properties required for the particular ink-jet printing device. The Erdtmann patent describes clay absorbent which can be blended with a water-based ink-jet printing medium to provide shortened drying time.

Printing media suitable for use in an impact printing technique are generally not suitable for jetting through an ink-jet printing device. Applicant has come to recognize as a problem the fact that each ink-jettable composition has been heretofore effectively limited to use with a specific application utilizing a particular ink-jet device.

Applicants have come to appreciate that many printing operations which are now primarily accomplished utilizing an impact printing technique, for example, textile printing (generally carried out utilizing screen printing techniques) could benefit from the flexibility offered by a printing technique utilizing an ink-jet printing device. However, the wide variety of printing medium which has been developed for impact printing techniques, and particularly, printing medium which has been refined to particular applications, for example, textile printing, is not available in a comparable printing medium which is ink-jettable. Accordingly, the rapid setup and change of patterns afforded by printing utilizing an ink-jet printing device is limited by the paucity offprinting medium which is ink-jettable. Applicants have recognized the desirability of providing a means for converting the widely available printing medium suitable for impact printing techniques to a composition having the properties required for applications utilizing an ink-jet printing device.

### Summary of the Invention

Applicants have surprisingly found that printing medium suitable for application to a substrate utilizing an impact printing technique (herein, "viscous printing compositions") can be adapted to provide ink-jettable compositions by adding to viscous printing compositions a carefully selected diluent capable of imparting to the viscous composition the properties needed to permit the composition to be effectively and economically applied to a substrate utilizing an ink-jet printing device. The ink-jettable compositions formed in accordance with the present invention preferably maintain the printing properties and post-printing characteristics of the viscous printing composition from which it is formed.

The method of the invention is defined in claim 1.

Preferably the resulting ink-jettable composition has a Brookfield viscosity of less than about 20 cps, and even more preferably of from about 5 cps to about 20 cps, at the operating temperature of an impulse ink-jet printing device. The resulting ink-jettable composition also preferably has a surface tension, as measured by the platinum ring method, of less than about 50 dynes/cm, preferably less than about 45 dynes/cm, more preferably from about 25 dynes/cm to about 40 dynes/cm and even more preferable from about 30 dynes/cm to about 40 dynes/cm.

The present methods are generally adaptable for use in connection with the conversion of hydrophilic viscous printing compositions (for example, viscous printing compositions comprising at least about 1 wt. % water). For methods of converting hydrophilic viscous printing compositions, it is preferred that the diluent further comprises, in addition to the surface tension modifier, water, at least one glycol and optionally, ammonium hydroxide and/or supplemental hydrophilic solvent. It is also preferred in certain of such embodiments that the hydrophilic viscous printing composition comprises more than about 10 wt. % water. In certain embodiments the resulting ink-jettable compositions are formed by combining up to about 50 parts by weight (pbw), more preferably from about 10 pbw to about 40 pbw, of a hydrophilic viscous printing medium and up to about 60 pbw diluent in accordance with the present invention.

One embodiment of the method aspects of the present invention is a process for preparing an ink-jettable printing medium comprising:
(a) providing a paste suitable for application to a substrate by a screen printing technique;
(b) forming a blend by adding to said paste a diluent miscible with said paste and capable of dispersing the paste, the amount of the diluent being sufficient to provide the blend with a Brookfield viscosity at about 25°C of less than about 100 cps and a surface tension of less than about 70 dynes/cm when measured by the platinum ring technique; and
(c) filtering said blend to remove particles having a dimension larger than about 1 micron, said blend being further characterized in that it is adapted to wet the materials of construction comprising the ink-contacting components of an ink-jet printing device and in that it is jettable through an ink-jet printing device, preferably a pulsed-type ink-jet printing device.

Another aspect of the present invention is a process for utilizing an ink-jet printing device to apply to a substrate a printing paste which is in a form suitable for application to a substrate utilizing a screen printing technique, the process comprising: (a) converting said printing paste to an ink-jettable composition by adding to the paste a diluent; and (b) applying the ink-jettable composition to a substrate with an impulse type ink-jet printing head.

### Detailed Description

The present invention is demonstrated below by adapting a viscous printing composition to an ink-jettable composition which has a form suitable for application utilizing an impulse-type ink-jet printing device such as those described in U.S. Patent Nos. 6,302,536 to Sarma et al., 6,179,408 to Rogers et al., and 4,697,193 to Howkins. The ink-jet printing devices described include both fill-before-fire, and fire-before-fill ink-jet printing devices. It will be appreciated that the principles demonstrated are applicable to adapting a wide range of viscous printing compositions to any known ink-jet printing device. Accordingly, the examples described herein are meant to illustrate the invention and not to limit it to the compositions and processes exemplified.

### INK-JET PRINTING DEVICES

The present invention relates to adapting printing medium to a form suitable for application utilizing ink-jet printing devices. Ink-jet printing devices can be classified in three groups: (i) continuous-type ink-jet devices (CIJ) which emit a constant stream of droplets; (ii) impulse-type ink-jet devices (sometimes referred to as drop-on demand), which employ some form of pulsing mechanical actuator to force media through an orifice to form a stream of ink droplets; and (iii) thermal-type ink-jet devices (also referred to as "bubble jet" devices) which uses heat to vaporize one or more components of the printing medium to generate a pressure "bubble" which forces the printing medium through an orifice in a series of "bursts", to form a stream of droplets. The term "ink-jet printing device" as used herein includes all of the above mentioned types of devices and any such device not yet developed but which operates on the basic principles described herein.

The various ink-jet printing devices described above can be operated, or adapted for operation, over a wide range of temperatures. The present invention is believed to be adaptable for the production of ink-jettable compositions, in particular, printing inks useful in printing devices operating in all such operating temperatures. It will be appreciated that the viscosity of compositions described herein when measured "at an operating temperature of a particular type of ink-jet printing device" contemplates that the composition will have that viscosity value (or a value within the stated range) which is observed for at least one temperature within the operating temperature ranges now available for that type of ink-jet printing device or for devices which later become available with operating temperature capabilities outside of those described herein. Preferably, the present methods and compositions provide ink-jettable inks useful in ink-jet printing devices having an operating temperature of less than about 150°C. The compositions and methods of the present invention are preferably adapted for use with thermal ink-jet printing devices that have an operating temperature at least about 100°C. Compositions and methods of the present invention are preferably adapted for use with continuous ink-jet printing devices that have an operating temperature range from about 25°C to about 30°C. In certain embodiments, the present compositions and methods provide ink-jettable compositions useful in impulse ink-jet printing devices having an operating temperature of from about 25°C to about 150°C. It will be appreciated that temperatures above and below these values are also possible.

### THE METHODS

As described above, a printing medium which is "ink-jettable", that is, suitable for application to a substrate using an ink-jet printing device, preferably possess certain viscosity and surface tension properties, the specifics of which will generally depend upon the particular type of ink-jet printing device through which it is to be "jetted" and the temperature at which the device is operated. In general, viscosity properties can be determined by measuring the viscosity of the printing medium in a Brookfield viscometer. The methods of measurement of printing medium viscosity using a Brookfield viscometer are known and published, for example, ASTM testing standard D 1986-91 (2002), which is for measuring polyethylene waxes and which can be applied to printing inks, and those described in Paint and Coating Testing Manual, 14th Edition, (ASTM) edited by J. V. Koleske (1995). As will be appreciated, viscosity generally changes with temperature. The preferred viscosity properties of compositions of the invention are described herein either with reference to a particular temperature as measured at that temperature by a Brookfield viscometer, or with reference to a viscosity which is observed for the composition at some temperature within the operating range of an ink-jet printing device.

Another property of ink-jettable compositions which is important in certain embodiments is the surface tension of the composition. The surface tension of a composition can be determined by measurement according to published standards utilizing "ring" techniques, for example, ISO 4311 June 1, 1979, ASTM D-1331-89 (2001) May 26,1989, DIN 13310 August 1, 1982, and BSEN 14210:2003 January 19, 2004. One commercially available surface tension testing apparatus which measures surface tension by a ring technique compliant with one or more of such standards is, for example, a Tensiomat Model 21 (Fischer Scientific). Surface tension measurements which utilize the ring technique embodied in the Tensiomat and the above-referenced standards is referred to herein for convenience as a surface tension value determined by the "platinum ring technique".

In general, the present ink-jettable compositions are prepared by providing viscous printing medium characterized as being suitable for application to a substrate utilizing an impact printing technique, and blending therewith a diluent in an amount sufficient and of a type effective to provide an ink-jettable composition of sufficiently low viscosity that it can be jetted through an ink-jet printing device. It is also preferred that the composition has surface tension and/or wetting properties consistent with ink-jet printing.

As the term is used herein, a "viscous printing compositions", also referred to herein sometimes for convenience as "viscous printing medium" is a flowable material to be applied by a screen printing technique. Viscous printing compositions can be either hydrophilic or lipophilic. As the term is used herein, a hydrophilic viscous printing composition is partially or completely miscible with water. As the term is used herein, a lipophilic viscous printing composition is partially or completely miscible with a fatty acid oil, that is, an oil comprising a free fatty acid or one or more fatty acid derivative (generally derived from animal and vegetable sources), for example, the commercially available Emersol^{®} series of lubricants and solvents available from Cognis Corporation. The terms partially miscible and completely miscible, as used herein, correspond generally to the terms as defined by Hawley's Condensed Chemical Dictionary, 12th Ed. 1993. Viscous printing compositions for use in forming the ink-jettable compositions of the present invention have Brookfield viscosities in excess of 100 cps at ambient temperature and preferably in excess of 200 cps at ambient temperature.

In many cases the preferred diluent depends upon the specifics of the application, including particularly the type of viscous printing composition being converted to an ink-jettable composition. Diluents which are particularly well adapted for hydrophilic and lipophilic viscous printing compositions are described in detail below. In general, the diluent of the present invention is characterized by: (i) being partially or completely miscible with the viscous printing composition; and (ii) upon blending with the viscous printing composition it maintains the printing composition in dispersion, thereby preventing the printing composition or its components from settling from a dispersed state.

The preferred diluents of the present invention preferably comprise, and in some embodiments, consists essentially of:
(a) at least one surface tension modifier which is at least partially miscible with the viscous printing composition; and
(b) optionally a solvent at least partially miscible with the viscous printing composition.

The surface tension modifiers are preferably selected from the group consisting essentially of glycol derivatives, compounds that are at least partially miscible with the viscous printing composition and which have surface active properties substantially similar to glycol derivatives, and combinations of these. As used herein, the term "glycol derivative" refers to any glycol compound (as defined herein) in which the hydrogen of at least one hydroxyl functional group has been replaced by another organo-functional group, for example, an ester, amino, carboxylate, ether, or other functional group. The term "glycol derivative" includes also compounds having a glycol moiety in which more than one hydroxyl group has been replaced by an organo-functional group, for example, those mentioned above. The glycol derivative compounds adaptable for use with the present invention include mono-, di-, and tripropylene glycol methyl ether, mono-, di-, and tri-propylene glycol n-butyl ether, mono-, di-, and tripropylene glycol n-propyl ether, mono- and diethylene glycol n-butyl ether, polypropylene glycol alkyl-ethers where the alkyl group has from about 1 to about 6 carbon atoms and is linear, branched, or cyclic, and propylene glycol methyl ether acetate. It will be appreciated that in some compositions in accordance with known principles, it may be desirable to include in the diluent composition mixtures of two or more glycol derivative compounds.

Glycol derivative compounds suitable for uses in the processes and compositions of the invention are selected for their surface-active properties. For use in a hydrophilic diluent the glycol derivative (or mixture of glycol derivatives) is chosen to allow admixing of the diluent and the viscous printing composition and to promote the miscibility of the viscous printing composition being converted with both the solvent water and (if present) any glycol constituent or constituents which are present also in the diluent composition. In some preferred hydrophilic diluent compositions a preferred glycol derivative is tripropylene glycol methylene ether.

In hydrophilic diluent compositions, some water soluble or water miscible organic solvents can be substituted for a water soluble glycol derivative surface tension modifier to provide ink-jettable compositions with equivalent or improved jetting properties. Any of the optional water soluble or water miscible organic solvents described above which have surface active properties substantially similar to water soluble glycol derivatives can be used in lieu of a glycol derivative in a diluent composition, for example, N-alkyl heterocyclic amines. In some preferred compositions, a particularly preferred organic solvent surface tension modifier is N-methyl pyrolidine.

Other constituents may be added to the diluent and/or to the ink-jet printable composition. Examples of such other constituents include additional binder, colorant, resin, biocides, foam control agents, and the like.

Preferably the diluent is of a type which is effective and is used in an amount sufficient to provide an ink-jettable composition having a Brookfield viscosity of less than about 100 cps at ambient temperature, that is, from about 20°C to about 30°C, and even more preferably a Brookfield viscosity of less than about 20 cps at a temperature within the operating temperature range of at least one ink-jet printing device. It will be appreciated in view of the teachings contained herein that the amount and type of diluent used in combination with a viscous printing medium (whether lipophilic or hydrophilic) can be adjusted to provide an ink-jettable composition having a viscosity and surface tension lying outside of the ranges stated above.

Additional constituents may be added to compositions of the invention. For example, additional binders may be added to improve the adhesion of the printing medium to the substrate, for example, AQ51® prepared extender base (Garston, Inc.). Additional colorants may also be added to decrease the number of times the printing device must be passed over an area of the substrate to be printed to apply a layer of printing medium of sufficient thickness to obtain the desired color intensity. Other art-recognized constituents may be added also, for example, a biocide.

### FORMATION OF HYDROPHILIC INK-JETTABLE COMPOSITIONS

Hydrophilic viscous printing composition suitable for use in the ink-jettable compositions and processes of the present invention can be divided into two groups, water-based hydrophilic viscous printing compositions (water-based medium) and solvent-based hydrophilic viscous printing compositions (solvent-based medium). Water-based medium in accordance with the present invention preferably comprises colorant and at least about 10 wt. % water. Preferred water-based medium is further characterized in that it is partially or completely miscible with at least one member selected from the group consisting of water, glycerin, and alcohols having less than about 5 carbon atoms when amounts of these substances are added in accordance to the present invention to the printing medium in addition to any water, glycerin, or alcohol already contained therein. Water-based medium of the present invention also preferably is not miscible with alcohols having more than about 6 carbon atoms and also preferably has a boiling point of less than about 150°C.

Preferably, the water-based medium of the present invention comprises: (a) from about 26 parts by weight (pbw) to about 88 pbw water; (b) from about 7 pbw to about 50 pbw colorant (preferably including a water soluble dye or pigment); (c) up to about 23 pbw diethylene glycol; (d) up to about 13 pbw resins; and (e) up to about 5 pbw amino alcohol. In some preferred compositions the hydrophilic viscous printing composition is a water-based screen printing paste, more preferably, a commercially available water-based screen printing paste. Examples of suitable water-based hydrophilic viscous printing composition include water-based paints, water-based adhesives, and screen printing paste used for the application of decorative markings on a textile substrate. An example of a commercially available water-based hydrophilic viscous printing composition is the Aquaprint RFU^{®} 9500/8550 clear concentrate series of screen ink (Garston, Inc. Manchester, CT).

Preferred solvent-based medium in accordance with the present invention comprise colorant and from about 1 wt% to about 10 wt% water as well as a partially or completely water-miscible solvent, for example, propylene glycol and water soluble alcohols and amines. Preferably the solvent-based hydrophilic viscous printing medium suitable for use in the process and compositions of the present invention is partially or completely miscible with at least one alcohol when amounts of the alcohol in accordance with the present invention are added to the printing medium in addition to any already contained therein. Solvent-based medium of the present invention preferably has a boiling point above about 150°C. Examples of suitable solvent-based medium include solvent-based adhesives, for example, epoxy adhesives containing methyl ethyl ketone (MEK).

Preferably hydrophilic viscous printing composition suitable for use in the compositions and processes of the present invention, whether water-based or solvent-based, comprise one or more components miscible with at least one glycol compound and at least one glycol derivative compound comprising the diluent (described in detail below). An example of suitable viscous hydrophilic printing medium is 9500 Aquaprint RFU^{®} screen ink used for printing on textile substrates, for example, cotton, cotton blends, and linen.

In certain preferred embodiments, the ink-jettable compositions of the present invention are formed by combining up to about 50 pbw hydrophilic viscous printing composition and greater than about 50 pbw of a diluent in accordance with the present invention. In certain embodiments the hydrophilic viscous printing composition is a screen printing paste.

Certain preferred hydrophilic ink-jettable compositions of the invention are formed by combining from about 1 pbw to about 40 pbw, more preferably 10 pbw to about 40 pbw, and even more preferably about 30 phw, of hydrophilic viscous printing composition and from about 60 pbw to about 99 pbw of diluent in accordance with the present invention. Other preferred compositions comprise from about 1 pbw to about 15 pbw of a hydrophilic viscous printing composition and from about 85 pbw to about 99 pbw of diluent in accordance with the present invention. It should be appreciated, however, that the compositions of the present invention may lie outside of these ranges depending on the needs of a particular application, including consideration of the constituents present in the viscous printing composition blended with the diluent and the materials of construction and operating parameters of the ink-jet printing device to which the viscous printing composition is adapted.

The ink-jettable compositions of the present invention are preferably characterized by chemical and physical properties and/or by the behavior in an ink-jet printing device. In certain preferred embodiments, the ink-jettable compositions of the invention prepared from a hydrophilic viscous printing composition (sometimes referred to herein as "hydrophilic ink-jettable composition") preferably have: (a) a Brookfield viscosity of from about 1 centipoise (cps) to about 20 cps when measured at a temperature within the operating range of an ink-jet printing device from which the ink-jettable composition is jetted (preferably from about 20°C to about 150°C), and/or (b) a surface tension, as measured by the platinum ring method, of less than about 70 dynes/cm, preferably less than about 65 dynes/cm.

For continuous-type ink-jet printing devices and thermal-type ink-jet printing devices, hydrophilic ink-jettable compositions preferably have: (a) a Brookfield viscosity observed far at least one temperature within the operating range of at least one such ink-jet device (preferably, for continuous ink-jet devices, less than about 30°C, and for thermal devices, preferably at least about 100°C) of from about 1 centipoise (cps) to about 10 cps, more preferably from about 1 cps to about 5 cps; and (b) a surface tension, as measured by the platinum ring technique of less than about 72 dynes/cm, more preferably less than about 65 dynes/cm. In certain preferred embodiments, surface tension is in the range of from about 25 to about 50 dynes/cm, and even more preferably from about 30 dynes/cm to about 40 dynes/cm.

For impulse-type ink-jet printing devices, certain preferred hydrophilic ink-jettable compositions of the present invention have a Brookfield viscosity observed for at least one temperature within the operating range of at least one such ink-jet device (preferably from about 20°C to about 150°C) of from about 5 cps to about 20 cps and a surface tension, as measured by the platinum ring technique, of less than about 72 dynes/cm, preferably less than about 70 dynes/cm, and even more preferably less than about 65 dynes/cm. In certain of such embodiments the surface tension is preferably from about 25 to about 50 dynes/cm, and even more preferably from about 30 dynes/cm to about 40 dynes/cm. Some preferred hydrophilic ink-jettable compositions for use in an impulse-type ink-jet print head which has an operating temperature of from about 25°C to about 60°C have a Brookfield viscosity at some temperature within the operating range of from about 10 cps to about 15 cps, and a surface tension, as measured by the platinum ring technique, of from about 35 dynes/cm to about 45 dynes/cm. Another preferred hydrophilic ink-jettable composition for use in an impulse-type ink-jet printing device which operates at ambient temperature (from about 20°C to about 30°C) has a Brookfield viscosity of from about 3 cps to about 5 cps at ambient temperature, and a surface tension of from about 35 dynes/cm to about 40 dynes/cm.

In other preferred embodiments, the hydrophilic ink-jettable compositions of the invention have a Brookfield viscosity of less than about 13 cps at a temperature of from about 30°C to about 40°C and have a surface tension, as measured by the platinum ring method, of less than about 70 dynes/cm, preferably less than about 65 dynes/cm, more preferably from about 25 dynes/cm to about 50 dynes/cm and even more preferable from about 30 dynes/cm to about 40 dynes/cm.

The diluent used to form ink-jettable compositions from hydrophilic viscous printing compositions (hydrophilic diluent) preferably comprises:
i. water;
ii. at least one glycol;
iii. one or more surface tension modifier;
iv. optionally, ammonium hydroxide; and,
v. optionally one or more hydrophilic solvent.

The preferred glycol included in the hydrophilic diluent of the present invention comprises at least one compound containing at least one glycol moiety, that is, a dihydric alcohol. Examples of compounds containing a glycol moiety are monomers, oligomers, and polymers of dihydric alcohols, for example, ethylene and propylene glycol and their oligomers and polymers. It will be appreciated that mixtures of any two or more of the compounds selected from glycols and their oligomers and polymers may also be used. It is preferred to use glycols which are liquids at a temperature within the range of operating temperature of the ink-jet printing device (also sometimes referred to herein for convenience as a "print head") to which a viscous printing composition is being adapted. Advantageously, higher melting glycols can be used if, when combined with optional solvents and/or other constituents of the diluent, they provide a composition which is in a liquid form at a temperature within the operating range of the print head to which a viscous printing composition is being adapted. Glycol compounds are selected to be miscible with the viscous printing composition with which they are blended and with water. Examples of suitable glycol compounds are mono-, di-, tri-, and tetra ethylene glycol and mono-, di-, and tripropylene glycol.

It will be appreciated that the purity of glycol compounds suitable for use in diluent compositions may vary from material of commercial or technical grades to high purity reagent grade materials. It will be appreciated also that, in accordance with known principles, it may be desirable to employ mixtures of various glycol compounds in the compositions and processes of the present invention. For some preferred hydrophilic diluent compositions propylene glycol is preferred as the glycol constituent.

It will be appreciated that when ammonium hydroxide is included in the diluent it can be added either as an individual component, or premixed with water and added as an aqueous ammonium hydroxide solution. When added as a solution, it is preferably added as an ammonium hydroxide solution containing from about 2.5 wt. % ammonium hydroxide to about 20 wt. % ammonium hydroxide. In general, ammonium hydroxide of any purity from commercial grade to pharmaceutical grade can be employed.

Examples of optional hydrophilic solvents include water miscible or water soluble alkyl alcohols, amines, ketones, esters, and water miscible organic solvents having mixed functional groups. Examples of ketones and alkyl alcohols are those comprising up to about 6 carbon atoms, having a linear, branched, or cyclic, alkyl group, for example, acetone, ethanol and methanol. Examples of water miscible solvents having mixed functional groups include diacetone alcohol and N-methyl pyrrolidine. It will be appreciated that other solvents having similar miscibility or solubility properties can be employed in addition to or in lieu of those exemplified, as well as combinations of two or more solvents.

In general, the amount of water, the amount of ammonium hydroxide (if used), the amount and type of glycol, the amount and type of surface tension modifier, and optional solvent(s) employed in the diluent composition can vary over wide range within the scope of the present invention, and all such variations are within broad scope hereof. The particular types and amounts used can be determined by those skilled in the art in view of the teachings contained herein based on, among other factors, the properties desired of the ink-jettable composition, the constituents of the printing paste, the operating characteristics and materials of construction employed in the printing head which will be used, and the substrate to be printed.

In certain preferred compositions, the hydrophilic diluent comprises: (a) from about 5 parts by weight (pbw) to about 20 pbw water; (b) from about 0.5 pbw to about 1 pbw ammonium hydroxide; (c) from about 10 pbw to about 40 pbw glycol; and (d) from about 20 pbw to about 50 pbw of water miscible surface tension modifier. In certain other preferred embodiments, the hydrophilic diluent consists essentially of: (a) about 1 wt. % ammonium hydroxide; (b) about 20 wt. % water; (c) about 7 wt. % glycerine; (d) about 29 wt. % propylene glycol; and (e) about 43 wt. % tripropylene glycol methyl ether (surface tension modifier). In yet other preferred embodiment the diluent comprises: (a) from about 70 pbw to about 85 pbw water; (b) from about 5 pbw to about 25 pbw glycol, preferably diethylene glycol; (c) from about 5 pbw to about 25 pbw of surface tension modifier, preferably N-methyl pyrolidine; (d) up to about 12 pbw glycerol; and (e) up to about 0.5 pbw of a binder, preferably AQ 51 prepared extender base. A particularly preferred composition comprises from about 70 pbw to about 82 pbw water, from about 6 pbw to about 22 pbw diethylene glycol, from about 6 pbw to about 22 pbw N-methyl pyrolidine, up to about 12 pbw glycerol, and up to about 0.5 pbw binder, preferably Q 51 prepared extender base.

One aspect of the present invention is directed to methods for altering, preferably independently, the viscosity and surface tension of ink-jettable compositions prepared from hydrophilic viscous printing compositions. Accordingly, the viscosity of hydrophilic ink-jettable compositions can be altered, preferably without substantially altering the surface tension of the composition, by adjusting the relative amount of a glycol added to the composition. The surface tension of hydrophilic ink-jettable compositions of the invention can be altered, preferably without substantially altering the viscosity of the ink-jettable composition by adjusting the relative amounts of water added to the composition.

### PREPARATION OF COMPOSITIONS

The adaptive process of the present invention can be carried out, and the ink-jettable compositions of the present invention can be prepared, by blending the various constituents of the diluent composition together and then mixing the diluent composition with an aliquot of a viscous printing composition according to the principles described above. Alternatively, the ink-jettable compositions of the invention can be prepared and the adaptive process of the invention can be carried out, by combining each and severally the individual components of the diluent composition directly with an aliquot of a viscous printing composition. The ink-jettable compositions of the invention maybe prepared also, and the adaptive process of the invention carried out, by combining, in any suitable order, each and severally the various constituents of the viscous printing composition and of a diluent composition. It will be appreciated that many variations of these processes may equally well be carried out to provide the compositions and adaptive processes of the invention. Any of the aforementioned processes are contemplated by the phrase "blending" or "combining" a "viscous printing composition and a diluent composition".

In general, during preparation of the diluent, it will be beneficial to heat the constituents of the diluent together with blending to ensure homogeneity of the diluent constituents. In general it will also be advantageous to combine the viscous printing composition and diluent composition at a temperature above ambient to promote dispersion of the viscous printing composition in the diluent. It will be appreciated that any mixing equipment, from manually operated berich-top scale equipment to motorized industrial-scale equipment, of any description suitable for blending together two flowable materials, for example a viscous screen printing paste and a liquid diluent, can be used to combine the constituents of the composition.

The ink-jettable compositions formed in accordance with the present invention have a Brookfield viscosity of less than about 100 cps at ambient temperature (that is, at a temperature of from about 20°C to about 30°C) and a surface tension, when measured by the platinum ring technique, of less than about 70 dynes/cm, preferably less than about 65 dynes/cm, more preferably from about 25 dynes/cm to about 50 dynes/cm and even more preferably from about 30 dynes/cm to about 40 dynes/cm. The ink-jettable compositions are further preferably characterized in that they are capable of "wetting" the ink-contacting parts of at least one ink-jet printing device. Preferably, the viscous printing composition is provided from a condition of storage that is amenable to providing a portion of the viscous printing composition to an impact printing process.

The processes of the present invention includes also an additional step, a filtration step to remove particles which may be adverse to jetting through an ink-jet printing device (for example, to remove particles bigger than about 1 micron in diameter). The process may include additional steps, such as a diluent heating step prior to or during combination of the diluent and viscous printing composition, and if a heating step is used, a cooling step following the blending of the diluent and viscous printing composition. Additionally, a degassing step may be carried out following the filtration step.

It will be appreciated that heating and cooling can be accomplished by any means known for heating and cooling liquids and semi-solids and plastic materials. It will be appreciated also that degassing can be accomplished by any known means, for example, by leaving the composition to stand quiescent for a period of hours or by subjecting the composition to a vacuum. It is preferred to apply the adaptive process to hydrophilic viscous printing compositions and more preferred to select the hydrophilic viscous printing compositions from water-based screen printing pastes.

The following examples are presented for the purpose of illustrating the foregoing description and are not meant to limit the scope of the claimed invention.

### EXAMPLES

There follows two examples of preparing an ink-jettable composition of the present invention from a screen printing paste and application of the composition to a substrate utilizing an ink-jet printing device.

### EXAMPLE 1 : Adapting a Screen Printing Paste to a Form

### Suitable For Application to a Substrate Utilizing an Ink-Jet Printing Device

A diluent for adapting a hydrophilic viscous printing composition suitable for application to a substrate utilizing a screen printing technique to a form suitable for application utilizing an ink-jet printing device was prepared by mixing, in a jacketed vessel equipped with a stirring paddle, 14.5 kilograms (Kg) of water, 500 grams (g) of ammonium hydroxide (technical grade, article of commerce), 5 Kg of glycerine (USP grade, article of commerce), 20 Kg of propylene glycol, and 30 Kg of tripropylene glycol methyl ether. After addition of all constituents, the diluent mixture was heated to about 40°C and held at between about 35°C and about 40°C with stirring for about two hours.

At the end of two hours, 30 Kg of Cyan base Aquaprint RFU 9500/8550 series^{®} screen printing paste (Garstan, Inc.) was added to the diluent mixture (maintained at a temperature of from about 35°C to about 40°C) with continuous stirring. Stirring was continued for about 3 hours after the addition with heating to maintain the temperature of the blended composition in the range of about 35°C to about 40°C. The blended composition was allowed to cool to ambient temperature, about 25°C, and pressure-filtered through a 1 micron absolute filter (Pressure Filtration^{®} under 20 psig of driving pressure. The blended composition (ink-jettable composition) was left standing quiescent under ambient for about one hour to deareate the composition. A sample of the ink-jettable composition thus prepared was measured in a Mastersize 2000^{®} particle size analyzer (Malvern Instruments, Woburn, MA) and found to have a particle size distribution of less than 1 micron. The viscosity and surface tension of the ink-jettable composition was measured. The composition had a Brookfield viscosity at 25°C of about 14 cps, and a surface tension, measured by the platinum ring technique, of about 38 dynes/cm. The ink-jettable composition had a water content of about 10 wt.% to about 30 wt. %.

The above-prepared ink-jettable composition was placed into the reservoir of a UJII 96/32 print head equipped printer (Trident, Inc.) adapted for printing on textile substrates. Square swatches of 100% cotton test fabric (each side 6", Test Fabric PA) was inserted into the printer. The printer head was adjusted to a 40°C operating temperature and operated at constant temperature. Up to 6 printing passes were executed to form text letters on the textile. It was found that the ink-jettable composition yielded letters having satisfactory color density in between 3 to 6 passes. After printing was completed, the textile samples were baked for about 3 minutes in an oven heated to about 150°C to cure the printing medium. The printed images were found to be the equivalent in clarity and color to the same image applied to a similar test swatch using Cyan base Aquaprint RFU 9500 screen printing paste (Garston, Inc.) by a screen printing technique.

It will be appreciated that the combination of steps described in Example 1 illustrates also an example of a process for applying a screen printing paste to a substrate utilizing an impulse-type ink-jet printing head, the process comprising: (a) providing a screen printing paste which has a viscosity in excess of about 20 cps and a surface tension in excess of about 65 dynes/cm; (b) storing said screen printing paste under conditions suitable to permit application of a portion of said stored screen printing paste to a textile substrate utilizing a screen printing process; (c) subsequent to step (b), introducing to a portion of said screen printing paste a diluent having a composition and in an amount that provides upon admixture a composition having a viscosity and a surface tension suitable for application to a surface utilizing an ink-jet printing device; (d) removing particles larger than about 1 micron from said admixture; and (e) applying said admixture to a textile substrate.

In Example 2, eight colors of screen printing paste are adapted in accordance with the present invention to an ink-jettable form and applied to a textile substrate using a Mimaki TX2-1600 textile printer (the printer). The printer is equipped with eight Epson impulse (drop on demand) ink-jet print heads which operate at ambient temperature. Each of the eight print heads of the printer is fed by a separate ink reservoir.

### EXAMPLE 2 - Adapting a Screen Printing Paste for

### Application to Textile Using an Ink-jet Printing Device

Using the procedure described above in Example 1 for preparing an ink-jettable composition, aliquots of cyan, light cyan, magenta, light magenta, yellow, blue, gray, and black RFU 9500/8500 Aquaprint series^{®} screen textile ink were adapted to an ink-jettable form suitable for jetting from the Mimaki printer described above. Accordingly, a diluent composition was prepared by blending in a jacketed vessel equipped with a stirring paddle, 26 kilograms (Kg) of water, 4 Kg of N-methyl pyrrolidine, 4 Kg of diethylene glycol, 4 Kg of glycerine (USP grade, article of commerce), and 2 Kg of AQ51 prepared extender base as a binder (Garston). After all of the constituents had been added to the vessel it was heated to about 40°C and held at a temperature of from about 35°C to about 40°C with continued stirring for about two hours. After about two hours, the diluent was partitioned into eight equal aliquots (about 5 Kg each).

Each diluent aliquot in turn was heated to a temperature in the range of from about 35°C to about 40°C in a jacket vessel. When the aliquot of diluent had warmed to the set temperature, a 2 Kg aliquot of a color of RFU 9500/8500 Aquaprint series^{®} screen textile ink selected from those described above was added to the warm diluent with stirring until a substantially homogeneous mixture (ink-jettable composition) was prepared. The ink-jettable composition was cooled to ambient temperature, about 25°C, and pressure-filtered through a 0.5 micron absolute filter (Pressure Filtration^{®} under 20 psig of driving pressure. Each aliquot of ink-jettable composition prepared by the above procedure was left to stand quiescent in the ambient environment for about one hour to deareate. A sample of each color ink-jettable composition was measured in a Mastersize 2000^{®} particle size analyzer (Malvern Instruments, Woburn, MA) and found to have a particle size distribution of less than 1 micron. The viscosity and surface tension properties of each color of ink-jettable composition were also measured. All samples were found to have a Brookfield viscosity at 25°C of from about 3 cps to abut 5 cps, and a surface tension, as measured by the platinum ring technique, of from about 35 dynes/cm to about 40 dynes/cm. Each color of the ink-jettable composition prepared above had a water content of from about 60 wt.% to about 70 wt.%.

An aliquot of each color of the ink-jettable composition prepared above was transferred under ambient conditions to a different reservoir of the above-described Mimaki printer. Square test swatches (6" on each side) comprising cotton, polyester, polyester/cotton blend, and silk (Test Fabric PA) were imprinted with a full color test pattern using the Epson print head-equipped Mimaki printer. After printing, the swatches were placed into a convection oven at about 300°F to about 325°F for 3 minutes to cure.

Random samples of each of the cured swatches were visually compared to test swatches of the same cloth type imprinted with the same pattern using a conventional screen printing technique and the RFU 9500/8500 Aquaprint series® screen textile ink used in the preparation of the ink-jettable compositions described above. The two differently imprinted groups of swatches were found to have substantially similar appearance. Randomly selected samples of the imprinted swatches were chosen from each type of fabric and tested according to methods promulgated by the American Association of Textile Chemists and Colorist (AATCC). Thus, swatches were tested for wash-fastness according to AATCC method 61-2003 and for light-fastness according to AATCC method 16-2003. Under these testing conditions, the swatches imprinted in accordance with the present invention were found to compare favorably to test samples imprinted with the same image by conventional screen techniques using conventional textile screen ink.

These results demonstrate that a viscous printing medium can be adapted for application by an ink-jet printing device, according to the present invention, and preserve the desirable performance characteristics of the viscous printing medium.

## Claims

1. A method of forming an ink-jettable composition comprising:
providing a hydrophilic viscous textile printing composition having a Brookfield viscosity in excess of 100 cps at 25°C and which is suitable for application to a substrate by screen printing;
adding to said viscous printing composition a diluent comprising
at least one surface tension modifier, said surface tension modifier selected from the group consisting of N-alkyl heterocyclic amines, mono-, di-, and tri-propylene glycol n-butyl ether, mono-, di-, and tripropylene glycol n-propyl ether, mono- and diethylene glycol n-butyl ether, propylene glycol methyl ether acetate, and polypropylene glycol alkyl-ethers where the alkyl group has from about 1 to about 6 carbon atoms and is linear, branched, or cyclic, wherein said surface tension modifiers are further **characterised by** being water soluble or water miscible;
at least one glycol and water;
optionally a solvent; and
filtering the blend to remove particles greater than 1 µ; and
wherein the diluent is added under conditions and in an amount effective to produce an ink-jettable composition having a viscosity as measured by a Brookfield viscometer of less than 100 cps at 25°C and a surface tension of less than 70 dynes/cm when measured by the platinum ring technique, said diluent being miscible with the viscous printing composition.

2. The method of claim 1, wherein said diluent surface tension modifier is selected from the group consisting of water soluble and water miscible glycol derivatives.

3. The method of claim 2, wherein the composition of the diluent and the amount thereof is selected such that the ink-jettable composition has a content of 5 to 70 wt % water, 10 to 40 wt % glycol and 20 to 50 wt % surface tension modifier.

4. The method of any preceding claim, wherein the viscous printing composition is used in an amount in the range 1 to 15% based on the total weight of viscous printing composition and diluent.

5. The method of claim 2, wherein said diluent further comprises ammonium hydroxide.

6. The method of claim 1, wherein the diluent is added in an amount to provide an ink-jettable composition having a Brookfield viscosity in the range 5 to 20 cps.

7. The method of claim 1, wherein the surface tension of the ink-jettable composition is less than 50 dynes/cm, preferably in the range 25 to 45 dynes/cm, more preferably in the range 30 to 40 dynes/cm.

8. The method of claim 1, wherein the diluent comprises (a) from 5 parts by weight (pbw) to 20 pbw water; (b) from 0.5 pbw to 1 pbw ammonium hydroxide; (c) from 10 pbw to 40 pbw glycol; and (d) from 20 pbw to 50 pbw of water miscible surface tension modifier.

9. The method of claim 1, wherein the diluent consists essentially of (a) 1 wt % ammonium hydroxide; (b) 20 wt % water; (c) 7 wt % glycerine; (d) 29 wt % propylene glycol; and (e) 43 wt % tripropylene glycol methyl ether (surface tension modifier).

10. The method of claim 1, wherein the diluent comprises: (a) from 70 pbw to 85 pbw water; (b) from 5 pbw to 25 pbw glycol; (c) from 5 pbw to 25 pbw of surface tension modifier; (d) up to 12 pbw glycerol; and (e) up to 0.5 pbw of a binder.

11. The method of claim 10, wherein the diluent comprises: a) from 70 pbw to 82 pbw water, b) from 6 pbw to 22 pbw diethylene glycol, c) from 6 pbw to 22 pbw N-methyl pyrollidine, d) up to 12 pbw glycerol, and e) up to 0.5 pbw binder.

12. The method of claims 10 or 11, wherein the binder is AQ51 prepared extender base.

13. The method of claim 1, in which the ink-jettable composition is jetted from an ink-jet printing device is selected from the group consisting of a continuous-type ink-jet printing device and a thermal-type ink-jet printing device.

14. The method of claim 1, in which the ink-jettable composition is jetted from an ink-jet printing device is an impulse-type ink-jet printing device.

15. The method of claim 14, in which the ink-jettable composition has a surface tension as measured by the platinum ring method of between 25 dynes/cm and 50 dynes/cm.

16. The method of claim 15, wherein the surface tension is between 30 dynes/cm and 40 dynes/cm.

## Patentansprüche

1. Verfahren zur Herstellung einer tintenstrahldrucktauglichen Zusammensetzung, bei dem man
eine siebdrucktaugliche hydrophile, viskose Textildruckzusammensetzung mit einer Brookfield-Viskosität über 100 cps bei 25°C bereitstellt und
mit einem Verdünnungsmittel, enthaltend
mindestens ein wasserlösliches oder wassermischbares Oberflächenmodifizierungsmittel, ausgewählt aus der Gruppe, bestehend aus N-Alkyl-heterocyclischen Aminen, Mono-, Di- und Tripropylenglykol-n-butylether, Mono-, Di- und Tripropylenglykol-n-propylether, Mono- und Diethylenglykol-n-butylether, Propylenglykolmethyletheracetat und Polypropylenglykolalkylethern mit etwa 1 bis etwa 6 Kohlenstoffatomen in der linearen, verzweigten oder cyclischen Alkylgruppe,
mindestens ein Glykol und Wasser,
gegebenenfalls ein Lösungsmittel, versetzt und
über 1 µ große Teilchen abfiltriert,
wobei das Verdünnungsmittel mit der viskosen Druckzusammensetzung mischbar ist und ihr in einer solchen Menge zugegeben wird, daß man eine tintenstrahldrucktaugliche Zusammensetzung mit einer per Brookfield-Viskosimeter gemessenen Viskosität von weniger als 100 cps bei 25°C und einer nach dem Platinringverfahren gemessenen Oberflächenspannung von weniger als 70 dyn/cm erhält.

2. Verfahren nach Anspruch 1, bei dem man das verdünnte Oberflächenmodifizierungsmittel auswählt unter wasserlöslichen und wassermischbaren Glykolderivaten.

3. Verfahren nach Anspruch 2, bei dem man die Zusammensetzung des Verdünnungsmittels und dessen Menge so wählt, daß die tintenstrahldrucktaugliche Zusammensetzung 5 bis 70 Gew.-% Wasser, 10 bis 40 Gew.-% Glykol und 20 bis 50 Gew.-% Oberflächenmodifizierungsmittel enthält.

4. Verfahren nach einem der vorhergehenden Ansprüche, bei dem man die viskose Druckzusammensetzung in einer auf das Gesamtgewicht von viskose Druckzusammensetzung und Verdünnungsmittel bezogenen Menge von 1 bis 15% einsetzt.

5. Verfahren nach Anspruch 2, bei dem das Verdünnungsmittel zusätzlich Ammoniumhydroxid enthält.

6. Verfahren nach Anspruch 1, bei dem man das Verdünnungsmittel in einer solchen Menge zusetzt, daß die tintenstrahldrucktaugliche Zusammensetzung eine Brookfield-Viskosität von 5 bis 20 cps aufweist.

7. Verfahren nach Anspruch 1, bei dem die Oberflächenspannung der tintenstrahldrucktauglichen Zusammensetzung weniger als 50 dyn/cm, bevorzugt 25 bis 45 dyn/cm und besonders bevorzugt 30 bis 40 dyn/cm beträgt.

8. Verfahren nach Anspruch 1, bei dem das Verdünnungsmittel enthält: (a) 5 Gewichtsteile bis 20 Gewichtsteile Wasser, (b) 0,5 Gewichtsteile bis 1 Gewichtsteil Ammoniumhydroxid, (c) 10 Gewichtsteile bis 40 Gewichtsteile Glykol sowie (d) 20 Gewichtsteile bis 50 Gewichtsteile an wassermischbarem Oberflächenmodifizierungsmittel.

9. Verfahren nach Anspruch 1, bei dem das Verdünnungsmittel im wesentlichen aus (a) 1 Gew.-% Ammoniumhydroxid, (b) 20 Gew.-% Wasser, (c) 7 Gew.-% Glycerin, (d) 29 Gew.-% Propylenglykol und 43 Gew.-% Tripropylenglykolmethylether (Oberflächenmodifizierungsmittel) besteht.

10. Verfahren nach Anspruch 1, bei dem das Verdünnungsmittel enthält: (a) 70 Gewichtsteile bis 85 Gewichtsteile Wasser, (b) 5 Gewichtsteile bis 25 Gewichtsteile Glykol, (c) 5 Gewichtsteile bis 25 Gewichtsteile an Oberflächenmodifizierungsmittel, (d) bis zu 12 Gewichtsteilen Glycerin und (e) bis zu 0,5 Gewichtsteilen eines Bindemittels.

11. Verfahren nach Anspruch 10, bei dem das Verdünnungsmittel enthält: (a) 70 Gewichtsteile bis 82 Gewichtsteile Wasser, (b) 6 Gewichtsteile bis 22 Gewichtsteile Diethylenglykol, (c) 6 Gewichtsteile bis 22 Gewichtsteile N-Methylpyrrolidin, (d) bis zu 12 Gewichtsteilen Glycerin und (e) bis zu 0,5 Gewichtsteilen Bindemittel.

12. Verfahren nach den Ansprüchen 10 oder 11, bei dem man als Bindemittel das Streckmittelpräparat AQ51 einsetzt.

13. Verfahren nach Anspruch 1, bei dem man die tintenstrahldrucktaugliche Zusammensetzung über eine kontinuierliche Tintenstrahldruckvorrichtung oder über eine thermische Tintenstrahldruckvorrichtung zur Anwendung bringt.

14. Verfahren nach Anspruch 1, bei dem man die tintenstrahldrucktaugliche Zusammensetzung über eine Drop-on-Demand-Tintenstrahldruckvorrichtung zur Anwendung bringt.

15. Verfahren nach Anspruch 14, bei dem die tintenstrahldrucktaugliche Zusammensetzung eine nach dem Platinringverfahren gemessene Oberflächenspannung zwischen 25 dyn/cm und 50 dyn/cm aufweist.

16. Verfahren nach Anspruch 15, bei dem die Oberflächenspannung zwischen 30 dyn/cm und 40 dyn/cm beträgt.

## Revendications

1. Procédé de formation d'une composition pour jet d'encre comprenant les étapes consistant à :
se procurer une composition d'impression sur textiles visqueuse, hydrophile, ayant une viscosité Brookfield dépassant 100 cP à 25°C et qui convient pour être appliquée sur un substrat par sérigraphie ;
ajouter à ladite composition d'impression visqueuse un diluant comprenant
au moins un modificateur de tension superficielle, ledit modificateur de tension superficielle étant choisi dans le groupe constitué par les N-alkylamines hétérocycliques, l'éther n-butylique de mono-, di- et tri-propylèneglycol, l'éther n-propylique de mono-, di- et tripropylèneglycol, l'éther n-butylique de mono- et diéthylèneglycol, l'acétate d'éther méthylique de propylèneglycol, et les éthers alkyliques de poly-propylèneglycol dans lesquels le groupe alkyle comporte d'environ 1 à environ 6 atomes de carbone et est linéaire, ramifié ou cyclique, lesdits modificateurs de tension superficielle étant en outre **caractérisés par le fait qu'**ils sont solubles dans l'eau ou miscibles avec l'eau ;
au moins un glycol et de l'eau ;
éventuellement un solvant ; et
filtrer le mélange pour éliminer les particules supérieures à 1 µm ; et
le diluant étant ajouté dans des conditions et en quantité efficace pour produire une composition pour jet d'encre ayant une viscosité, mesurée au moyen d'un viscosimètre Brookfield, inférieure à 100 cP à 25°C et une tension superficielle inférieure à 70 dynes/cm lorsqu'on la mesure par la technique de l'anneau de platine, ledit diluant étant miscible avec la composition d'impression visqueuse.

2. Procédé selon la revendication 1, dans lequel ledit diluant modificateur de tension superficielle est choisi dans le groupe constitué par les dérivés du glycol solubles dans l'eau et miscibles avec l'eau.

3. Procédé selon la revendication 2, dans lequel la composition du diluant et sa quantité sont choisies de telle sorte que la composition pour jet d'encre ait une teneur de 5 à 70% en poids d'eau, de 10 à 40% en poids de glycol et de 20 à 50% en poids de modificateur de tension superficielle.

4. Procédé selon l'une quelconque des revendications précédentes, dans lequel la composition d'impression visqueuse est employée en quantité sur la gamme de 1 à 15% par rapport au poids total de la composition d'impression visqueuse et du diluant.

5. Procédé selon la revendication 2, dans lequel ledit diluant comprend en outre de l'hydroxyde d'ammonium.

6. Procédé selon la revendication 1, dans lequel le diluant est ajouté en quantité permettant d'obtenir une composition pour jet d'encre ayant une viscosité Brookfield sur la gamme de 5 à 20 cP.

7. Procédé selon la revendication 1, dans lequel la tension superficielle de la composition pour jet d'encre est inférieure à 50 dynes/cm, de préférence sur la gamme de 25 à 45 dynes/cm, mieux encore sur la gamme de 30 à 40 dynes/cm.

8. Procédé selon la revendication 1, dans lequel le diluant comprend (a) de 5 parties en poids (pbw) à 20 pbw d'eau ; (b) de 0,5 pbw à 1 pbw d'hydroxyde d'ammonium ; (c) de 10 pbw à 40 pbw de glycol ; et (d) de 20 pbw à 50 pbw de modificateur de tension superficielle miscible avec l'eau.

9. Procédé selon la revendication 1, dans lequel le diluant est essentiellement constitué de (a) 1% en poids d'hydroxyde d'ammonium ; (b) 20% en poids d'eau ; (c) 7% en poids de glycérine ; (d) 29% en poids de propylèneglycol ; et (e) 43% en poids d'éther méthylique de tripropylèneglycol (modificateur de tension superficielle).

10. Procédé selon la revendication 1, dans lequel le diluant comprend : (a) de 70 pbw à 85 pbw d'eau ; (b) de 5 pbw à 25 pbw de glycol ; (c) de 5 pbw à 25 pbw de modificateur de tension superficielle ; (d) jusqu'à 12 pbw de glycérol ; et (e) jusqu'à 0,5 pbw d'un liant.

11. Procédé selon la revendication 10, dans lequel le diluant comprend : a) de 70 pbw à 82 pbw d'eau, b) de 6 pbw à 22 pbw de diéthylèneglycol, c) de 6 pbw à 22 pbw de N-méthylpyrollidine, d) jusqu'à 12 pbw de glycérol, et e) jusqu'à 0,5 pbw de liant.

12. Procédé selon les revendications 10 ou 11, dans lequel le liant est la base diluante préparée AQ51.

13. Procédé selon la revendication 1, dans lequel la composition pour jet d'encre est projetée à partir d'un dispositif d'impression à jet d'encre choisi dans le groupe constitué par un dispositif d'impression à jet d'encre de type continu et un dispositif d'impression à jet d'encre de type thermique.

14. Procédé selon la revendication 1, dans lequel la composition pour jet d'encre est projetée à partir d'un dispositif d'impression à jet d'encre qui est un dispositif d'impression à jet d'encre de type à impulsions.

15. Procédé selon la revendication 14, dans lequel la composition pour jet d'encre possède une tension superficielle, mesurée par le procédé à anneau de platine, qui est comprise entre 25 dynes/cm et 50 dynes/cm.

16. Procédé selon la revendication 15, dans lequel la tension superficielle est comprise entre 30 dynes/cm et 40 dynes/cm.
